# EUROPEAN PATENT APPLICATION

(11) **EP 3 835 901 A1**
(43) Date of publication of application: **16.06.2021**
(21) Application number: 19383113.8
(22) Date of filing: 13.12.2019
(51) Int. Cl.: G05B 19/418, H04L 29/08, B64F 5/40

(54) **FULL EQUIPMENT LIST AUTO IDENTIFICATION SYSTEM**

(71) Applicant: Airbus Defence and Space, S.A.U., 28906 Getafe - Madrid (ES)
(72) Inventor: MONTESINOS SANTOS, Francisco, Javier, 28906 Getafe (Madrid) (ES)
(74) Representative: Herrero & Asociados, S.L.

(57) **Abstract**

An equipment identification control system for aircrafts (100) comprising a MESH network with one or more low power bluetooth nodes (110, 120) and proxy nodes (131, 132) for obtaining equipment information via Bluetooth, in real time or on request, and sending it to a remote database via 3G or similar. The low power bluetooth nodes (110, 120) are associated with each equipment of the aircraft (100), for extracting or collecting the information via Bluetooth. Each proxy node (131, 132) is connected to one or more low power bluetooth relay nodes (120) via Bluetooth, and comprises storing means for storing the obtained information during the whole life cycle of each equipment and a SIM card to send the information to the database. The MESH network is connected to the aircraft maintenance bus bar and only works with the aircraft (100) on ground, during preflight checks.

## Description

### Field of the invention

The present invention relates to the field of aircraft configuration (equipment installed identification) and maintenance.

More particularly, the present invention refers to a Full Equipment List (FEL) auto identification system for controlling automatically the equipment of a complex system such as an aircraft (valid to others like boats, trains, bench ...) in order to optimize design, models, and production processes of complex systems as well as to aid in maintenance, troubleshooting and diagnostic operations.

The FEL auto identification system introduces a continuous relationship concept between equipment and its associated information, reaching equipment identification data traceability and consistency during all life cycle equipment

### Background of the invention

In the field of aviation infrastructure, equipment providers and aircraft manufactures know that an equipment list is maintained for each model and Serial Number of aircraft, defined as "Aircraft Configuration". "Aircraft Configuration" information is stored in a database containing a listing of each component and other data associated to these components.
Currently, the aircraft configuration is loaded manually into different databases each one designed to cover requirements fixed by the different domains of the aircraft manufacturing line (Design, Production, Servicing, Airworthiness...).

The changes on aircraft configuration usually come from: planned and/or unplanned maintenance activities, modifications or updated of software (Mods), service bulletins...

Information loaded in the aforementioned databases are related to all equipment fitted to the aircraft, including those data that permit to flight under rules fixed by external entities and the corresponding Aiworthiness Authority.

From these databases, "required snapshots" are extracted manually by the aircraft operators looking for detailed information.

Due to manual introduction, many mistakes are detected during this process and consequently data consistency, traceability, credibility and reliability in aircraft configuration control process is lost.

Additionally, after aircraft delivery, much information is lost because of communications between the customer and industry, deteriorating aircraft configuration control process.

Therefore, it is highly desirable to provide a system to control the aircraft configuration automatically so that design improvement, production optimizations, maintenance upgrades and data models updates can be performed in a more effective way (in terms of time, costs and quality).

### Summary of the invention

The present invention solves the aforementioned problems and overcomes previously explained state-of-art work limitations by providing an aircraft configuration control system which obtains and transfer, in an automatic way, information about the equipment installed in the aircraft and control all the equipment data during the whole life cycle of the equipment.

An aspect of the present invention refers to a Full Equipment List (FEL) auto identification system for controlling the configuration of equipments installed in an aircraft according to claim 1.

The proposed FEL system works during the maintenance process before operation of the aircraft, i.e., during the preflight checking. The preflight checking in the aviation industry is a standard procedure for maintenance operators, pilots and aircrew to go over a preflight checklist of tasks to be performed prior to takeoff, ensuring that no important tasks are forgotten to improve flight safety.

After the aircraft delivery, the FEL system itself can be maintained and its operation is possible as an additional standard aircraft system.

The FEL system comprises hardware and software that allow the authorized personnel to know about all the equipment and elements installed in a complex infrastructure like an aircraft or its rig (this involves engine controls, flight deck controls, retractable landing gear component parts, attaching hardware, and any movable flight control elements attached to aircraft major surfaces, such as wings and vertical and horizontal stabilizers; e.g., cables, ailerons attached to the wings, elevators attached to the horizontal stabilizer, and the rudder attached to the vertical stabilizer.)

The FEL system is based on a MESH network which uses Bluetooth technology (preferably, BLE: Bluetooth Low Energy) to obtain the information of the aircraft configuration and a wireless mobile telecommunications technology (preferably, 3G required to assure coverture in all the world) to send all the obtained information to a database.

The equipment is delivered by the supplier with its information loaded during the manufacture phase and installed in the equipment delivered. Therefore, the obtained information can be used to check or study fails and behaviours of the equipment during all its life cycle.

The present invention has a number of advantages with respect to prior art, which can be summarized as follows:
- The present invention allows the introduction of a continuous relationship concept between equipment and its information associated, reaching equipment identification, data traceability and consistency during all the life cycle of the equipment in the aircraft. The relationship "one equipment → one datal is assured for all its life cycle.
- The proposed system is autonomous because the MESH network connected, via Bluetooth too, to a "Proxy node" that records and processes all the information. This "Proxy node" can be powered by aircraft maintenance bus bar and only works with the aircraft on ground, during preflight activities, while the system is "off" during aircraft operations.
- This present invention avoids the need of qualification and certification processes, such as TEMPEST (Temporary elctro-magnetic pulse espoxiton system test), EMI/EMC (Electomagnetic interference and compatibility), etc.
- The present invention is applicable to other industries such as automotive, rail, maritime, architecture and energy... industries that need to have a robust and consistent real time configuration control.
- The present invention improves current situation of the configuration control in the aforementioned transportation systems from the point of view of consistency, traceability, credibility and reliability.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:

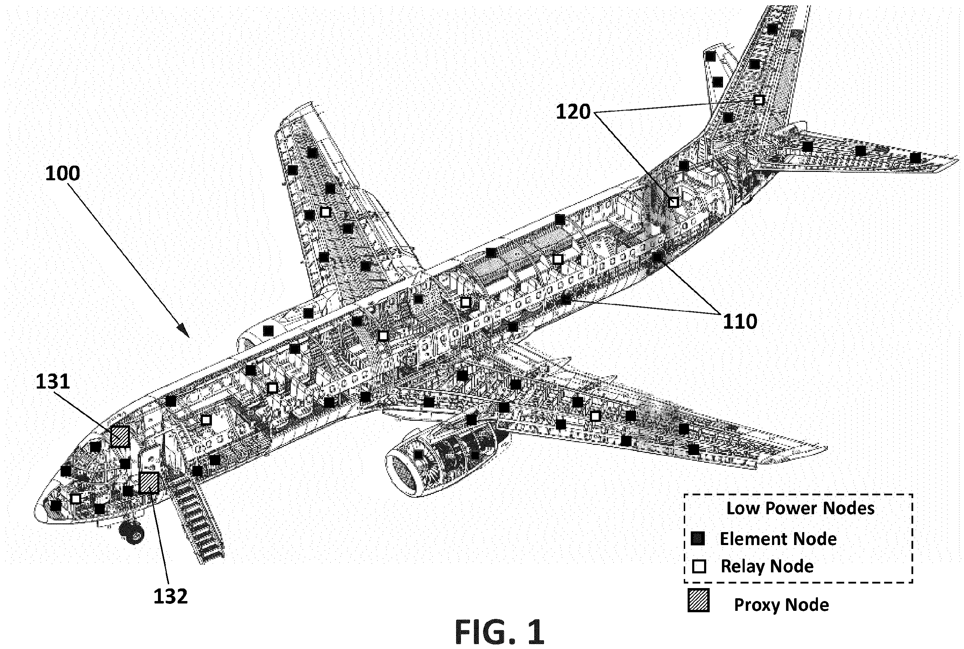

Figure 1 shows a possible nodes distribution of the automatic configuration control system in an aircraft, according to a preferred embodiment.

### Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

Figure 1 presents a schematic diagram of an aircraft (100) equipped with a system for controlling the configuration of its equipments, the system comprising a MESH network with a plurality of nodes (110, 120, 131, 132). There are distinguished at least two kinds of network nodes depicted in Figure 1 as follows and described below:
i) Gray squares correspond to proxy nodes (131, 132) connected to the battery bus bar of the aircraft (100).
ii) Black squares and White squares correspond to low power Bluetooth node (110, 120) distributed throughout the aircraft (100).

Suppliers provides each element/equipment of the aircraft (100), already fitted as required by the aircraft manufacturer, with storing means, an EEPROM, for storing an identifier of the element/equipment (e.g., serial number, part number, etc.). During production phase, the supplier provides the element/equipment with an integrated circuit comprising: a microprocessor, a battery, a Bluetooth transceiver and an EEPROM in which the equipment information is loaded by the supplier. This integrated circuit may include a RAM if required, for example for rig testing. The integrated circuit is a low power Bluetooth node (110, 120), preferably using BLE (Bluetooth Low Energy). The low power Bluetooth node (110, 120) is autonomous thanks to the battery.

The Integrated circuit to be installed on the equipment by the supplier can be designed by the aircraft manufacturer taking into account equipment location, temperature, humidity and the installation process of the aircraft.

On one hand, the proxy nodes (131, 132) connect through the MESH network to the bluetooth nodes (110, 120) associated with each element/equipment of the aircraft (100). On the other hand, the proxy nodes (131, 132) connect through a wireless mobile telecommunications technology, preferably 3G, to a remote database, which may be located in the facilities of the aircraft manufacturer.

The proxy node (131, 132) is connected to the aircraft battery bus bar to be fed by the DC power received from the aircraft battery bus bar.

The MESH network is activated only during maintenance process before operation of the aircraft (100), i.e., during the preflight checks. All elements/equipments of the aircraft (100) are then activated, for example, they pass from STAND-BY status to ON status, by a command launched from the at least one Proxy Node (131, 132).

Equipment information is sent by one or more low power bluetooth nodes (110, 120) through the MESH network to the Proxy Node (131, 132). This information is recorded in the Proxy Node (131, 132), e.g. in a RAM, and can be stored together with additional information coming from other (external or internal) sources and received also in the Proxy Node (131, 132), for example:
- Time and Location data received from a GPS card (which may be installed in the Proxy Node).
- Specimen identification (i.e., Aircraft Serial Number) loaded during the Proxy Node equipment installation by the aircraft manufacturer.
- Data regarding the integrity of the information transferred in the MESH network, integrity which is checked by the Proxy Node (131, 132).

The Proxy Node (131, 132) packages all this information and sent it via SIM (3G) to an external database and, at the same time, this information can be recorded internally in the storage of the Proxy Node (131, 132).

In addition, the Proxy Node (131, 132) comprises GPS and/or GNSS devices, USB and/or UART interfaces, and a backup battery. In a possible embodiment, as the example shown in Figure 1, there are a plurality of Proxy Nodes (131, 132) located in the cockpit of the aircraft (100) obtaining the collected information from all the low power Bluetooth nodes (110, 120) which cover all the equipment in the cockpit, cabin, wings, tail, etc.

In a possible embodiment, the low power Bluetooth node (110, 120) associated with a specific element/equipment of the aircraft (100) is an element node (110), drawn as a black square in Figure 1, directly connected to, attached to or integrated into, the associated element/equipment and configured to extract the equipment data from the EEPROM. In another possible embodiment, the low power Bluetooth node (110, 120) is a relay node (120), drawn as a white square in Figure 1, connected to multiple element nodes (110) to collect all the information extracted from each element/equipment associated with the corresponding element node (110) and, optionally, store it in the storing means of the relay node (120). Both types of low power Bluetooth node (110, 120) are communicated through their Bluetooth transceivers to send and receive the equipment data.

In other possible embodiments, relay nodes (120) may be separated from each other in a determined range, e.g., less than 10 meters, due to aircraft manufacturing factors such as shrounding, shielding, etc. Long structures of the aircraft (100) may need relay nodes (120) evenly spaced from the element nodes (110). Low density fuselages allow to install relay nodes (120) for structures of the aircraft (100) farther from the cockpit, i.e: wigs, HTP (Horizontal Tail Plane). The element nodes (110) may be located preferably near a maintenance access, underwing, a Manufacturer's Datum Point (MPD), etc.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A full equipment listauto identification system for controlling the configuration of equipments installed in an aircraft (100), the system comprising a MESH network to be installed in the aircraft (100), **characterized in that** the MESH network is activated during a preflight checking of the aircraft (100) and comprises a plurality of nodes (110, 120, 131, 132) for obtaining equipment data via Bluetooth, in real time or on request, and sending the obtained equipments data to a remote database via a wireless mobile telecommunications interface, the MESH network obtaining and sending the equipment data while activated and during a whole life cycle of the equipment.

2. The system according to claim 1, wherein the MESH network comprises:
- one or more low power bluetooth nodes (110, 120) comprising one or more bluetooth relay nodes (120), associated with each equipment of the aircraft (100), for extracting or collecting the equipment data via Bluetooth; and
- at least one proxy node (131, 132) connected to the relay nodes (120) via Bluetooth, the proxy node (131, 132) obtaining the equipment data from the relay nodes (120) and comprising storing means for storing the obtained equipment data and at least a SIM card to send the obtained equipment data via the wireless mobile telecommunications interface.

3. The system according to claim 2, wherein the low power bluetooth node (110, 120) comprises storing means for storing the equipment data provided by a supplier of the equipment.

4. The system according to claim 3, wherein the storing means of the low power bluetooth node (110, 120) is an EEPROM.

5. The system according to any of claims 2-4, wherein the low power bluetooth node (110, 120) comprises at least a battery.

6. The system according to any of claims 2-5, wherein the low power bluetooth node (110, 120) and the proxy node (131, 132) comprise a BLE transceiver.

7. The system according to any of claims 2-6, wherein the storing means of the proxy node (131, 132) is a RAM.

8. The system according to any of claims 2-7, wherein the at least one proxy node (131, 132) is connected to a battery bus bar of the aircraft (100).

9. The system according to any preceding claim, wherein the equipment data comprise at least one of: a part number and a serial number of the equipment.

10. The system according to any preceding claim, wherein the wireless mobile telecommunications interface is 3G.

11. The system according to any preceding claim, wherein the low power bluetooth node is an element node (110) attached to the associated equipment of the aircraft (100).

12. The system according to claim 11, wherein the relay node (120) is connected to multiple element nodes (110) via Bluetooth for collecting all the equipment data extracted by the element nodes (110) from all the equipments associated with the connected element nodes (110).

13. The system according to claim 12, wherein the relay nodes (120) are separated from each other in a range determined by aircraft manufacturing factors.

14. The system according to any of claims 12-13, wherein the relay nodes (120) are evenly spaced from the element nodes (110).

15. The system according to any of claims 12-14, wherein the relay nodes (120) are located in the wings or the tail of the aircraft (100), and the element nodes (110) are located near a maintenance access or underwing.
